(19) **Europäisches Patentamt**
**European Patent Office**
**Office européen des brevets**

(11) **EP 2 475 571 B1**

(12) **FASCICULE DE BREVET EUROPEEN**

(45) Date de publication et mention
de la délivrance du brevet:
**17.07.2013 Bulletin 2013/29**

(21) Numéro de dépôt: **10747880.2**

(22) Date de dépôt: **02.09.2010**

(51) Int Cl.:
***B62K 11/00*** *(2013.01)* ***G01M 17/007*** *(2006.01)*

(86) Numéro de dépôt international:
**PCT/EP2010/062889**

(87) Numéro de publication internationale:
**WO 2011/029771 (17.03.2011 Gazette 2011/11)**

(54) **PROCEDE DE TRAITEMENT DE DONNEES POUR LA DETERMINATION DE VALEURS DE DERIVE D'AU MOINS UN PNEUMATIQUE**

DATENVERARBEITUNGSVERFAHREN ZUR BESTIMMUNG DER DRIFTWERTE VON MINDESTENS EINEM REIFEN

DATA PROCESSING METHOD FOR DETERMINING DRIFT VALUES OF AT LEAST ONE TIRE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **10.09.2009 FR 0956218**

(43) Date de publication de la demande:
**18.07.2012 Bulletin 2012/29**

(73) Titulaires:
• **COMPAGNIE GENERALE DES ETABLISSEMENTS MICHELIN**
**63000 Clermont-Ferrand (FR)**
• **MICHELIN Recherche et Technique S.A.**
**1763 Granges-Paccot (CH)**

(72) Inventeur: **MARTIN, Denis**
**F-63000 Clermont-Ferrand (FR)**

(74) Mandataire: **Lasson, Cédric Y. M.**
**Manufacture Française**
**des Pneumatiques Michelin**
**CER Ladoux - F35**
**F-63040 Clermont-Ferrand Cedex 9 (FR)**

(56) Documents cités:
**EP-A1- 0 280 889     US-A1- 2003 059 744**

**Description**

La présente invention concerne un procédé de traitement de données pour la détermination de valeurs de dérive d'au moins un pneumatique d'un véhicule.

Le procédé de l'invention trouve notamment des applications dans le domaine de l'automobile et/ou de la moto.

Afin d'étudier les performances d'un véhicule tel qu'une moto, il est généralement procédé à des essais sur une piste d'un circuit. Ces essais permettent de suivre l'évolution d'une pluralité de paramètres associés au véhicule en vue d'analyser le comportement dudit véhicule sur la piste. Ces paramètres peuvent être par exemple, la vitesse de lacet du véhicule, les efforts de freinage appliqués, le débattement d'une suspension, la température des pneumatiques, la pression des pneumatiques, l'angle de braquage de la roue avant de la moto, etc.

Un technicien spécialiste du pneumatique peut exploiter ces paramètres en vue d'analyser le comportement des pneumatiques de la moto et résoudre les problèmes rencontrés par le conducteur (vibration, perte d'adhérence, etc.).

Dans ce but, il est intéressant pour le technicien d'analyser l'évolution d'un paramètre particulier que constitue la dérive d'un pneumatique du véhicule.

Une valeur de dérive correspond à un angle formé entre une orientation d'un plan de roue associé à un pneumatique et une tangente à la trajectoire du pneumatique, au niveau d'un point de contact avec la piste.

On appelle « plan de roue » le plan, lié à une roue (et donc lié à un pneumatique), qui est perpendiculaire à l'axe de rotation de la roue et qui passe par le centre d'une aire de contact avec la piste lorsque la roue est verticale, c'est-à-dire perpendiculaire au plan de roulage de la piste. L'orientation du plan de roue varie donc comme celle de la roue.

On notera dès à présent que la dérive du pneumatique avant et la dérive du pneumatique arrière ne sont pas toujours identiques. En effet, lors d'un virage, le conducteur régule son action pour maintenir sa trajectoire. Le pneumatique avant de la moto est alors mis en dérive suite à l'action de braquage du conducteur. Le pneumatique arrière compense les efforts qui s'appliquent au véhicule (notamment la force centrifuge) en se mettant également en dérive. Un équilibre global du véhicule est alors retrouvé dans le virage par la mise en dérive du pneumatique avant et du pneumatique arrière.

Le technicien souhaite exploiter différentes valeurs de dérive du pneumatique avant et/ou arrière à différentes positions du véhicule sur la piste.

Un procédé de détermination de valeurs de dérive connu de l'art antérieur consiste à utiliser un dispositif de mesure à filtrage de fréquence locale fonctionnant selon le principe de la corrélation optique, ou bien dans un simulateur tel que celui du brevêt US 2003/0059744.

Ce dispositif de mesure fonctionne dans une plage limitée de valeurs de roulis du véhicule (plus ou moins 8 degrés) qui ne le rend pas adapté pour des véhicules de type moto dont la valeur de roulis dans les virages peut être supérieur à 30 degrés. Le roulis correspond à l'inclinaison de la moto dans un plan transversal à la moto perpendiculaire à la piste.

Il existe donc un besoin de proposer un procédé de détermination de valeurs de dérive de pneumatiques d'un véhicule et ceci quelles que soient les conditions climatiques et la nature de la piste.

L'invention concerne un procédé de traitement de données pour la détermination de valeurs de dérive d'au moins un pneumatique, ledit pneumatique appartenant à un véhicule à au moins deux roues comprenant au moins deux antennes GPS et des moyens de détermination de valeurs de roulis dudit véhicule. Le procédé comprend, pour différentes positions du véhicule sur une piste, une étape de détermination de coordonnées des antennes GPS, une étape de détermination de valeurs de roulis du véhicule, une étape de détermination de différents points de contact entre le pneumatique et la piste à partir de coordonnées d'au moins une des antennes GPS et de différentes valeurs de roulis du véhicule, lesdits points de contact formant une trajectoire du pneumatique sur la piste. Le procédé de traitement comprend également une étape de détermination d'une tangente à la trajectoire du pneumatique en au moins un point de contact parmi lesdits points de contact, une étape de détermination, à partir de coordonnées des antennes GPS, d'une orientation d'un plan de roue associé au pneumatique et une étape de détermination d'une valeur de dérive à partir de la tangente et de l'orientation du plan de roue.

L'invention permet ainsi de déterminer de manière simple et efficace les valeurs de dérive du pneumatique avant et/ou arrière d'une moto.

Pour déterminer les coordonnées des différents points de contact entre le pneumatique et la piste, l'invention propose de placer sur le véhicule au moins deux récepteurs GPS (pour « Global positioning System » en Anglais) comprenant chacun une antenne GPS. Pour chaque position de la moto sur la piste, il est ainsi possible d'obtenir les coordonnées des différentes antennes GPS. A partir de ces coordonnées et de la connaissance de la valeur de roulis de la moto dans la position en question, il est possible d'obtenir les coordonnées du point de contact du pneumatique arrière. Il est possible d'obtenir également les coordonnées du point de contact du pneumatique avant en tenant compte également d'une valeur de braquage de la roue avant.

Dans une variante de réalisation, le procédé de traitement comprend, pour différentes positions du véhicule sur la piste, une étape de détermination de valeurs de braquage de la roue avant du véhicule, et une orientation d'un plan de roue associé au pneumatique avant est déterminée en fonction d'une des valeurs de braquage et d'une direction longitudinale du véhicule déterminé à partir de coordonnées des antennes GPS.

Un autre objet de l'invention concerne un dispositif de traitement de données pour la détermination de valeurs de dérive d'au moins un pneumatique, ledit pneumatique appartenant à un véhicule à au moins deux roues comprenant au moins deux antennes GPS, des moyens de détermination de valeurs de roulis du véhicule, des moyens de détermination de coordonnées des antennes GPS pour différentes positions du véhicule sur une piste, des moyens de détermination de différents points de contact entre le pneumatique et la piste à partir de coordonnées d'au moins une des antennes GPS et de différentes valeurs de roulis du véhicule, lesdits points de contact formant une trajectoire du pneumatique sur la piste, des moyens de détermination d'une tangente à la trajectoire du pneumatique au niveau d'un point de contact parmi lesdits points de contact, des moyens de détermination, à partir de coordonnées des antennes GPS, d'une orientation d'un plan de roue associé au pneumatique, des moyens de détermination d'une valeur de dérive à partir de la tangente et de l'orientation du plan de roue.

Dans une variante de réalisation, la première antenne GPS est alignée avec la seconde antenne GPS dans un plan longitudinal du véhicule de sorte qu'un axe passant par la première antenne GPS et la seconde antenne GPS défini une direction longitudinale du véhicule.

Dans une variante de réalisation, la première antenne GPS et la seconde antenne GPS sont positionnées à une même hauteur sur le véhicule.

On limite ainsi l'influence du tangage dans la détermination des valeurs de dérive.

Dans une variante de réalisation, la première antenne GPS et la seconde antenne GPS sont positionnées respectivement à l'avant et à l'arrière du véhicule et la distance entre la première antenne GPS et la seconde antenne GPS est supérieure ou égale à un mètre.

On détermine ainsi de manière plus précise la direction longitudinale du véhicule.

Dans une variante de réalisation, les antennes GPS et les moyens de détermination de coordonnées sont compatibles avec la technologie RTK.

On améliore ainsi la précision dans la détermination des coordonnées des antennes GPS.

Dans une variante de réalisation, les antennes GPS sont également aptes à capter des signaux provenant de satellites appartenant au système de localisation de type GLONASS et les moyens de déterminations de coordonnées sont aptes à traiter lesdits signaux.

On s'assure ainsi que les antennes GPS reçoivent des signaux d'un nombre suffisant de satellites pour pouvoir déterminer les coordonnées desdites antennes lorsque le véhicule circule sur la piste.

Un autre objet de l'invention concerne un programme d'ordinateur pour le traitement de données pour la détermination de valeurs de dérive d'au moins un pneumatique, ledit pneumatique appartenant à un véhicule à au moins deux roues comprenant au moins deux antennes GPS et des moyens de détermination de valeurs de roulis dudit véhicule, ledit programme d'ordinateur comprenant des instructions pour la mise en oeuvre, pour différentes positions du véhicule sur une piste, d'une étape de détermination de coordonnées des antennes GPS, d'une étape de détermination de valeurs de roulis du véhicule, d'une étape de détermination de différents points de contact entre le pneumatique et la piste à partir de coordonnées d'au moins une des antennes GPS et de différentes valeurs de roulis du véhicule, lesdits points de contact formant une trajectoire du pneumatique sur la piste. Le programme d'ordinateur comprend également des instructions pour la mise en oeuvre d'une étape de détermination d'une tangente à la trajectoire du pneumatique en au moins un point de contact parmi lesdits points de contact, d'une étape de détermination, à partir de coordonnées des antennes GPS, d'une orientation d'un plan de roue associé au pneumatique et d'une étape de détermination d'une valeur de dérive à partir de la tangente et de l'orientation du plan de roue.

D'autres caractéristiques et avantages de l'invention ressortiront de la description suivante, donnée à titre d'exemple, sans caractère limitatif, en regard des dessins annexés sur lesquels :

- la figure 1 représente schématiquement une vue de côté d'une moto comprenant deux récepteurs GPS ;

- la figure 2 représente schématiquement une vue de dessus de la moto de la figure 1 ;

- la figure 3 représente schématiquement une vue arrière de la moto de la figure 1 lorsque celle-ci est inclinée dans un virage ;

- la figure 4 représente un organigramme des étapes d'un procédé de traitement de données pour la détermination de valeurs de dérive d'un pneumatique appartenant à la moto de la figure 1 ;

- la figure 5 représente un dispositif de traitement de données pour la mise en oeuvre du procédé de traitement de la figure 4.

Dans la présente description, l'invention est décrite dans une application de sélection de pneumatiques pour améliorer les performances d'un véhicule. Toutefois, on notera d'emblée que l'invention n'est pas limitée à cet exemple particulier de réalisation.

Dans la description qui va suivre, des éléments sensiblement identiques ou similaires seront désignés par des références identiques.

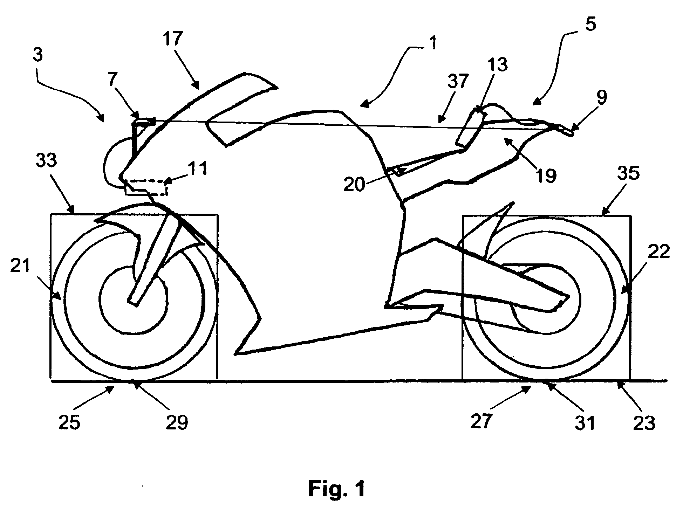

La figure 1 présente une vue schématique d'un véhicule, ici une moto 1. La moto 1 comprend, ici, un premier récepteur GPS 3 et un second récepteur GPS 5. Bien entendu, il est possible d'équiper la moto d'un plus grand nombre de récepteurs GPS.

Chaque récepteur GPS 3, 5 comprend une antenne GPS 7, 9 et des moyens 11, 13 de détermination de coordonnées des antennes GPS à différents instants.

La première antenne GPS 7 est positionnée à l'avant du véhicule au niveau d'une coquille avant 17. Plus précisément, la première antenne GPS 7 est positionnée devant la coquille avant 17 de sorte que les perturbations pour la réception de signaux GPS sont limitées.

La seconde antenne GPS 5 est positionnée à l'arrière du véhicule au niveau d'une coquille arrière 19 de la moto.

La moto 1 comprend également des moyens de détermination de valeurs de roulis 20 du véhicule. Ces moyens de détermination 20 sont positionnés, par exemple, sous un siège du conducteur.

La moto 1 comprend un pneumatique avant 21 et un pneumatique arrière 22. Chaque pneumatique 21, 22 est en contact avec une piste 23 respectivement au niveau d'une aire de contact avant 25 et d'une aire de contact arrière 27. L'aire de contact avant 25 et l'aire de contact arrière 27 sont sensiblement en forme d'ellipse.

Pour un traitement de données plus efficace, il est défini que le pneumatique avant 21 est en contact avec la piste 23 au niveau d'un point de contact avant 29 et le pneumatique arrière 22 est en contact avec la piste 23 au niveau d'un point de contact arrière 31. Il est possible de définir, par exemple, que le point de contact avant 29 est le centre de l'aire de contact avant 25 ou barycentre de l'aire de contact avant. Le point de contact arrière 31 est le centre de l'aire de contact arrière 27 ou barycentre de l'aire de contact arrière.

La moto 1 présente un plan de roue avant 33 associé au pneumatique avant 21 et un plan de roue arrière 35 associé au pneumatique arrière 22. Comme il a déjà été précisé, un plan de roue est un plan perpendiculaire à l'axe de rotation de la roue.

La seconde antenne GPS 9 est alignée avec la première antenne GPS 7 dans un plan longitudinal de sorte qu'un axe passant par la première antenne GPS 7 et par la seconde antenne GPS 9 défini une direction longitudinale 37 du véhicule.

On notera dès à présent que l'orientation du plan de roue arrière 35 est parallèle à la direction longitudinale 37 du véhicule.

Dans un autre mode de réalisation, la première antenne GPS 7 et la seconde antenne GPS 9 sont positionnées à une même hauteur sur le véhicule.

Dans un autre mode de réalisation, la distance entre la première antenne GPS 7 et la seconde antenne GPS 9 est supérieure ou égale à un mètre.

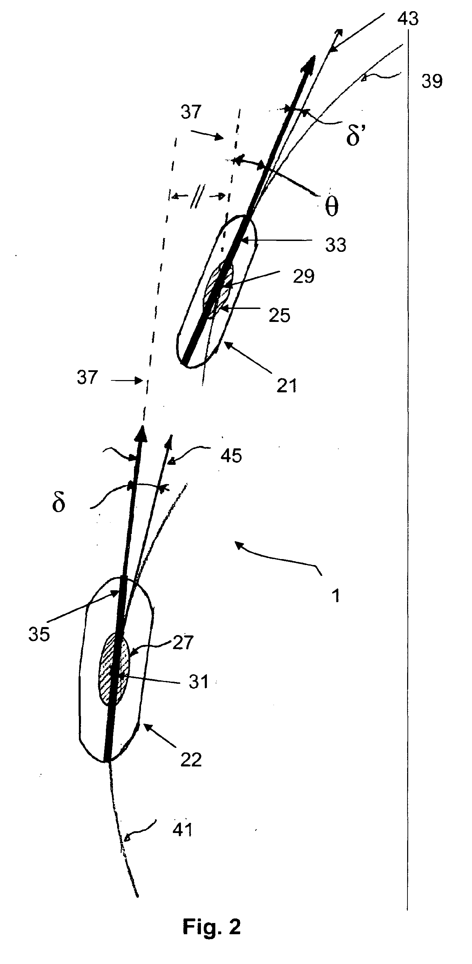

La figure 2 présente une vue de dessus de la moto 1 dans un virage où le conducteur braque la roue avant.

Une trajectoire avant 39 est associée au pneumatique avant 21. La trajectoire avant 39 est formée par l'ensemble des points de contact avant 29 entre le pneumatique avant 21 et la piste.

Il est ainsi possible de définir une tangente avant 43 à la trajectoire avant 39 en n'importe quel point de contact avant.

De la même manière, une trajectoire arrière 41 est associée au pneumatique arrière 22. La trajectoire arrière 41 est formée par l'ensemble des points de contact arrière 31 entre le pneumatique arrière 22 et la piste.

Il est également possible de définir une tangente arrière 45 à la trajectoire arrière 41 en n'importe quel point de contact arrière.

On remarque ainsi que la trajectoire avant 43 est différente de la trajectoire arrière 41 du fait de certaines caractéristiques de la moto comme l'angle de chasse et le déport au sol.

Une valeur de dérive du pneumatique arrière 22 correspond à l'angle $\delta$ formé entre la tangente arrière 45 et l'orientation du plan de roue arrière 35 (c'est-à-dire la direction longitudinale 37 du véhicule) au niveau du point de contact arrière 31.

Dans le cas du pneumatique avant 21, l'orientation du plan de roue avant 33 est décalée d'un angle de braquage $\theta$ par rapport à la direction longitudinale 37. L'angle de braquage $\theta$ correspond, ici, à la projection au sol de la rotation du guidon de la moto.

Une valeur de dérive du pneumatique avant 21 correspond à l'angle $\delta'$ formé entre la tangente avant 43 et l'orientation du plan de roue avant 33 au niveau du point de contact avant.

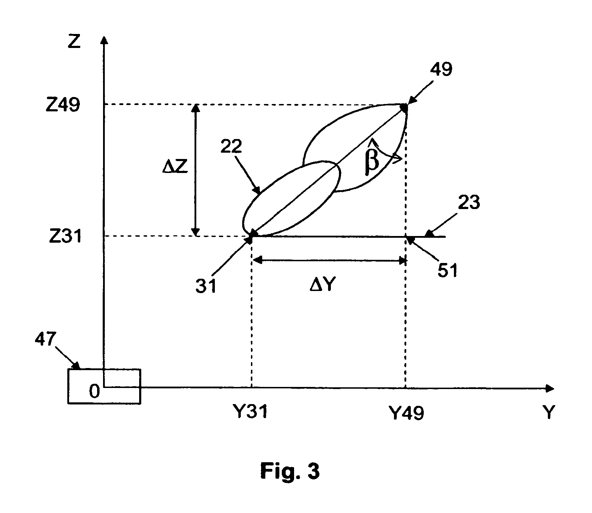

Nous allons maintenant expliquer, à partir de la figure 3, comment on détermine les coordonnées d'un point de contact arrière 31 à partir des coordonnées d'un point 49 appartenant à la seconde antenne GPS 9.

La figure 3 présente une vue arrière de la moto 1, dans un plan Y-Z, lorsque celle-ci est inclinée dans un virage.

Un troisième récepteur GPS 47 fixe par rapport à la piste détermine le point 0 origine du repère Y-Z. L'axe Y correspond ici à un axe horizontal et l'axe Z correspond à un axe vertical.

Le point de contact arrière 31 est déterminé par un couple de coordonnés {Y31, Z31} et le point 49 appartenant à la seconde antenne GPS 9 est déterminé par un couple de coordonnées {Y49, Z49}. Une distance $\Delta Y$ selon l'axe Y est définie entre le point de contact arrière 31 et le point 49. Une distance $\Delta Z$ selon l'axe Z est définie entre le point de contact arrière 31 et le point 49.

Le point 49 est par exemple le centre de la seconde antenne GPS 9.

La longueur L du segment [31, 49] est une donnée géométrique connue de la moto. Dans un premier mode de réalisation, la longueur L du segment [31, 49] est fixe.

Dans une variante de réalisation, la longueur L du segment [31, 49] est variable suivant la position de la moto 1 sur la piste, la vitesse de la moto 1, etc. La longueur L peut ainsi varier en fonction du débattement d'une suspension (non représentée) associée au pneumatique arrière 22.

Un point 51 correspond au projeté du point 49 sur la piste 23.

La moto 1 est ici inclinée d'un angle de roulis β. L'angle de roulis β est l'angle formé entre le segment [31, 49] et un segment [51, 49] vertical à la piste 23.

Il est ainsi possible d'établir le système d'équations suivant :

$$Y31 = Y49 - \Delta Y \quad avec \quad \Delta Y = \sin\beta * L$$

$$Z31 = Z49 - \Delta Z \quad avec \quad \Delta Z = \cos\beta * L$$

Il est alors possible de déterminer les coordonnées d'un point de contact arrière 31 à partir des coordonnées du point 49 appartenant à la seconde antenne GPS, à partir de la longueur L du segment [31, 49] et à partir de l'angle de roulis β.

On procèdera de la même manière pour déterminer les coordonnées d'un point de contact avant à partir des coordonnées d'un point appartenant à la première antenne GPS.

Il est cependant tout à fait possible de déterminer les coordonnées des points de contact avant et arrière à partir des coordonnées d'un point appartenant à une même antenne GPS (première antenne GPS ou seconde antenne GPS).

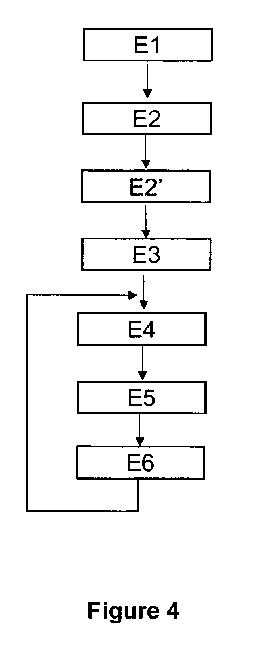

La figure 4 représente un organigramme des étapes d'un procédé de traitement de données pour la détermination de valeurs de dérive d'un pneumatique.

Le procédé de traitement de données comprend une étape E1 de détermination de coordonnées des antennes GPS 7, 9 pour différentes positions du véhicule sur la piste. Par détermination de coordonnées des antennes GPS 7, 9, il est compris que le procédé détermine les coordonnées de points particuliers appartenant aux antennes GPS 7, 9, par exemple, les centres des antennes GPS 7, 9.

Le procédé de traitement de données comprend également une étape E2 de détermination de valeurs de roulis du véhicule pour les différentes positions du véhicule sur la piste.

Dans une étape E3, le procédé détermine différents points de contact avant et différents points de contact arrière entre le ou les pneumatiques 21, 22 et la piste à partir des coordonnées des antennes GPS et différentes valeurs de roulis du véhicule. Comme il a déjà été précisé, les différents points de contact avant forment la trajectoire avant et les différents points de contact arrière forment la trajectoire arrière.

Le procédé de traitement de données comprend également une étape E4 de détermination d'une tangente à la trajectoire d'un pneumatique au niveau d'un point de contact.

Dans une étape E5, le procédé détermine une orientation d'un plan de roue associé au pneumatique à partir des coordonnées des antennes GPS.

Dans une étape E6, le procédé détermine une valeur de dérive à partir de la tangente et de l'orientation du plan de roue.

On notera qu'il est possible de répéter les étapes E4 à E6 pour déterminer différentes valeurs de dérive.

On notera également que le procédé de traitement de données est adapté pour la détermination de valeurs de dérive d'un pneumatique avant et/ou d'un pneumatique arrière. Dans le cas d'un pneumatique avant, il est nécessaire de prévoir une étape supplémentaire E2' de détermination de valeurs de braquage de la roue avant du véhicule. L'orientation d'un plan de roue associé au pneumatique avant est alors déterminée en fonction d'une des valeurs de braquage et d'une direction longitudinale du véhicule.

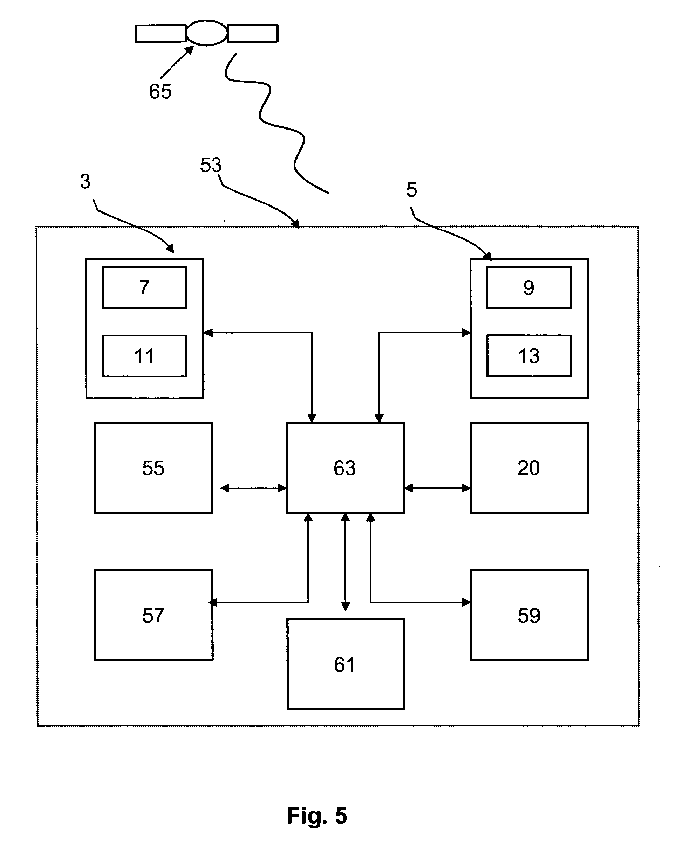

On va maintenant décrire, en référence à la figure 5, un dispositif de traitement 53 pour la détermination de valeurs de dérive d'un pneumatique.

Le dispositif de traitement 53 comprend ici :

- deux récepteurs GPS 3, 5 comprenant respectivement des antennes GPS 7, 9 et des modules 11, 13 de détermination de coordonnées des antennes GPS ;

- un module 20 de détermination de valeurs de roulis du véhicule ;

- un module 55 de détermination de différents points de contact entre le pneumatique et la piste ;

- un module 57 de détermination d'une tangente;

- un module 59 de détermination d'une orientation d'un plan de roue ;

- un module 61 de détermination d'une valeur de dérive ;

- une unité de commande 63.

Les antennes GPS 7, 9 sont aptes à recevoir des signaux provenant de satellites 65 appartenant à un système de localisation de type GPS et les moyens 11, 13 de détermination des coordonnées sont aptes à traiter les signaux GPS reçus par lesdites antennes GPS 7, 9.

Dans une variante de réalisation, les récepteurs GPS 3, 5 sont également aptes à recevoir des signaux provenant de satellites appartenant à un système de localisation de type GLONASS. On s'assure ainsi que les récepteurs GPS 3, 5 reçoivent des signaux d'un nombre suffisant de satellites pour que les moyens 11, 13 de détermination des coordonnées puissent déterminer les coordonnées desdites antennes GPS 7, 9.

Dans une variante de réalisation, les récepteurs GPS 3, 5 sont compatibles avec la technologie RTK (pour « Real Time Kinematic » en Anglais). Il est possible, grâce à cette technologie, de déterminer les coordonnées des antennes avec une précision de l'ordre du centimètre.

Le module 20 de détermination de valeurs de roulis du véhicule est apte à déterminer des valeurs de roulis du véhicule. Le module 20 se présente, par exemple, sous la forme de lasers ou sous la forme d'une centrale inertielle.

Le module 55 de détermination de différents points de contact est apte à déterminer des points de contact à partir de coordonnées des antennes GPS et des différentes valeurs de roulis.

Le module 57 de détermination d'une tangente est apte à déterminer une tangente à la trajectoire d'un pneumatique au niveau d'un point de contact.

Le module 59 de détermination d'une orientation d'un plan de roue est apte à déterminer l'orientation d'un plan de roue associé à un pneumatique.

Le module 61 de détermination d'une valeur de dérive est apte à déterminer la valeur d'une dérive à partir d'une tangente à la trajectoire d'un pneumatique et d'une orientation d'un plan de roue associé audit pneumatique.

L'unité de commande 63 est connectée aux récepteurs GPS 3, 5, au module 20 de détermination de valeurs de roulis du véhicule, au module 55 de détermination de différents points de contact, au module 57 de détermination d'une tangente, au module 59 de détermination d'une orientation d'un plan de roue, au module 61 de détermination d'une valeur de dérive.

L'unité de commande 63 a pour rôle de contrôler le fonctionnement des antennes GPS 7, 9 et des différents modules 11, 13, 55, 57, 59, 61.

Dans l'exemple décrit ici, les modules 11, 13, 55, 57, 59, 61 sont des moyens logiciels. L'invention concerne donc aussi un programme d'ordinateur comportant des instructions pour la mise en oeuvre du procédé de traitement de données précédemment décrit mise en oeuvre par le dispositif de traitement de données 53 lorsque le programme est exécuté par un processeur présent dans l'unité de commande 63. Ce programme peut être stocké dans ou transmis par un support d'informations. Celui-ci peut être un support matériel de stockage, par exemple un CD-ROM, une disquette magnétique ou un disque dur, ou bien un support transmissible tel qu'un signal électrique, optique ou radio.

**Revendications**

1. Procédé de traitement de données pour la détermination de valeurs de dérive ($\delta,\delta'$) d'au moins un pneumatique (21, 22), ledit pneumatique appartenant à un véhicule (1) comportant au moins deux roues, ledit véhicule comprenant au moins deux antennes GPS (7, 9) et des moyens (20) de détermination de valeurs de roulis ($\beta$) dudit véhicule, ledit procédé **caractérisé en ce qu'**il comprend les étapes suivantes :

- pour différentes positions du véhicule sur une piste :

    - détermination (E1) de coordonnées des antennes GPS ;
    - détermination (E2) de valeurs de roulis ($\beta$) du véhicule ;

- détermination (E3) de différents points de contact (29, 31) entre le pneumatique et la piste à partir de coordonnées d'au moins une des antennes GPS et de différentes valeurs de roulis, lesdits points de contact (29, 31) formant une trajectoire (39, 41) du pneumatique sur la piste ;
- en au moins un point de contact (29, 31) parmi lesdits points de contact :

    - détermination (E4) d'une tangente (43, 45) à la trajectoire du pneumatique au niveau dudit point de contact ;
    - détermination (E5) d'une orientation d'un plan de roue (33, 35) associé au pneumatique à partir de coordonnées des antennes GPS (7, 9) ;
    - détermination (E6) d'une valeur de dérive ($\delta,\delta'$) à partir de la tangente (43, 45) et de l'orientation du plan de roue (33, 35).

2. Procédé de traitement de données selon la revendication précédente comprenant, pour différentes positions du véhicule sur la piste, une étape (E2') de détermination de valeurs de braquage ($\theta$) de la roue avant du véhicule, et une orientation d'un plan de roue (33) associé au pneumatique avant (21) est déterminée en fonction d'une des valeurs de braquage et d'une direction longitudinale (37) du véhicule déterminé à partir de coordonnées des antennes GPS (7, 9).

3. Dispositif de traitement de données pour la détermination de valeurs de dérive ($\delta,\delta'$) d'au moins un pneumatique (21, 22), ledit pneumatique appartenant à un véhicule (1) à au moins deux roues **caractérisé en ce qu'**il comprend :

- au moins deux antennes GPS (7, 9);
- des moyens (11, 13) de détermination de coordonnées des antennes GPS pour différentes positions du véhicule sur une piste ;
- des moyens (20) de détermination de valeurs de roulis pour les différentes positions du véhicule sur la piste ;
- des moyens (55) de détermination de différents points de contact entre le pneumatique et la piste à partir de coordonnées d'au moins une des antennes GPS et de différentes valeurs de roulis ($\beta$), lesdits points de contact formant une trajectoire du pneumatique sur la piste ;

- des moyens (57) de détermination d'une tangente à la trajectoire du pneumatique au niveau d'un point de contact parmi lesdits points de contact ;
- des moyens (59) de détermination, à partir de coordonnées des antennes GPS, d'une orientation d'un plan de roue associé au pneumatique, audit point de contact ;
- des moyens (61) de détermination d'une valeur de dérive (δ,δ') à partir de la tangente et de l'orientation du plan de roue.

4. Dispositif de traitement de données selon la revendication précédente dans lequel une première antenne GPS (7) est alignée avec une seconde antenne GPS (9) dans un plan longitudinal du véhicule de sorte qu'un axe passant par la première antenne GPS (7) et la seconde antenne GPS (9) défini une direction longitudinale (37) du véhicule.

5. Dispositif de traitement de données selon l'une des revendications 3 à 4 dans lequel la première antenne GPS (7) et la seconde antenne GPS (9) sont positionnées à une même hauteur sur le véhicule.

6. Dispositif de traitement de données selon l'une quelconque des revendications 3 à 5 dans lequel la première antenne GPS (7) et la seconde antenne GPS (9) sont positionnées respectivement à l'avant et à l'arrière du véhicule et la distance entre la première antenne GPS (7) et la seconde antenne GPS (9) est supérieure ou égale à un mètre.

7. Dispositif de traitement de données selon l'une des revendications 3 à 6 dans lequel les antennes GPS (7, 9) et les moyens de détermination de coordonnées (11, 13) sont compatibles avec la technologie RTK.

8. Dispositif de traitement de données selon l'une des revendications 3 à 7 dans lequel les antennes GPS (7, 9) sont également aptes à recevoir des signaux provenant de satellites appartenant à un système de localisation de type GLONASS et les moyens de déterminations de coordonnées (11, 13) sont aptes à traiter lesdits signaux.

9. Programme d'ordinateur pour le traitement de données pour la détermination de valeurs de dérive (δ, δ') d'au moins un pneumatique (21, 22), ledit pneumatique appartenant à un véhicule (1) comportant au moins deux roues, ledit véhicule comprenant au moins deux antennes GPS (7, 9) et des moyens (20) de détermination de valeurs de roulis (β) dudit véhicule, **caractérisé en ce que** ledit programme d'ordinateur comprend des instructions pour la mise en oeuvre des étapes de :

- pour différentes positions du véhicule sur la piste :

  - détermination de coordonnées des antennes GPS (7, 9) ;
  - détermination de valeurs de roulis (β);

- détermination de différents points de contact (29, 31) entre le pneumatique (21, 22) et la piste à partir de coordonnées d'au moins une des antennes GPS (7, 9) et de différentes valeurs de roulis (β), lesdits points de contact formant une trajectoire (39, 41) du pneumatique sur la piste ;
- en au moins un point de contact parmi lesdits points de contact :

  - détermination d'une tangente à la trajectoire du pneumatique au niveau dudit point de contact ;
  - détermination, à partir de coordonnées des antennes GPS, d'une orientation d'un plan de roue associé au pneumatique ;
  - détermination d'une valeur de dérive à partir de la tangente et de l'orientation du plan de roue.

**Patentansprüche**

1. Datenverarbeitungsverfahren zur Ermittlung von Driftwerten (δ,δ') mindestens eines Luftreifens (21, 22), wobei der Luftreifen zu einem Fahrzeug (1) gehört, das mindestens zwei Räder aufweist, wobei das Fahrzeug mindestens zwei GPS-Antennen (7, 9) und Einrichtungen (20) zur Ermittlung von Wankwerten (β) des Fahrzeugs enthält, wobei das Verfahren **dadurch gekennzeichnet ist, dass** es die folgenden Schritte enthält:

  - für verschiedene Stellungen des Fahrzeugs auf einer Fahrbahn:

    - Ermittlung (E1) von Koordinaten der GPS-Antennen;
    - Ermittlung (E2) von Wankwerten (β) des Fahrzeugs;

  - Ermittlung (E3) verschiedener Kontaktpunkte (29, 31) zwischen dem Luftreifen und der Fahrbahn ausgehend von Koordinaten mindestens einer der GPS-Antennen und von verschiedenen Wankwerten, wobei die Kontaktpunkte (29, 31) eine Fahrspur (39, 41) des Luftreifens auf der Fahrbahn formen;
  - an mindestens einem Kontaktpunkt (29, 31) unter den Kontaktpunkten:

    - Ermittlung (E4) einer Tangente (43, 45) zur Fahrspur des Luftreifens im Bereich des Kontaktpunkts;
- Ermittlung (E5) einer Ausrichtung einer dem Luftreifen zugeordneten Radebene (33, 35) ausgehend von Koordinaten der GPS-Antennen (7, 9) ;
- Ermittlung (E6) eines Driftwerts (δ,δ') ausgehend von der Tangente (43, 45) und der Ausrichtung der Radebene (33, 35).

2. Datenverarbeitungsverfahren nach dem vorhergehenden Anspruch, das für verschiedene Stellungen des Fahrzeugs auf der Fahrbahn einen Schritt (E2') der Ermittlung von Lenkwinkelwerten (θ) des Vorderrads des Fahrzeugs enthält, und eine Ausrichtung einer dem vorderen Luftreifen (21) zugeordneten Radebene (33) wird abhängig von einem der Werte des Lenkwinkels und einer Längsrichtung (37) des Fahrzeugs ermittelt, die ausgehend von Koordinaten der GPS-Antennen (7, 9) ermittelt werden.

3. Datenverarbeitungsvorrichtung zur Ermittlung von Driftwerten (δ,δ') mindestens eines Luftreifens (21, 22), wobei der Luftreifen zu einem Fahrzeug (1) mit mindestens zwei Reifen gehört, **dadurch gekennzeichnet, dass** sie enthält:

   - mindestens zwei GPS-Antennen (7, 9);
   - Einrichtungen (11, 13) zur Ermittlung von Koordinaten der GPS-Antennen für verschiedene Stellungen des Fahrzeugs auf einer Fahrbahn;
   - Einrichtungen (20) zur Ermittlung von Wankwerten für die verschiedenen Stellungen des Fahrzeugs auf der Fahrbahn;
   - Einrichtungen (55) zur Ermittlung von verschiedenen Kontaktpunkten zwischen dem Luftreifen und der Fahrbahn ausgehend von Koordinaten mindestens einer der GPS-Antennen und von verschiedenen Wankwerten (β), wobei die Kontaktpunkte eine Fahrspur des Luftreifens auf der Fahrbahn formen;
   - Einrichtungen (57) zur Ermittlung einer Tangente zur Fahrspur des Luftreifens im Bereich eines Kontaktpunkts unter den Kontaktpunkten;
   - Einrichtungen (59) zur Ermittlung, ausgehend von Koordinaten der GPS-Antennen, einer Ausrichtung einer dem Luftreifen zugeordneten Radebene am Kontaktpunkt;
   - Einrichtungen (61) zur Ermittlung eines Driftwerts (δ,δ') ausgehend von der Tangente und der Ausrichtung der Radebene.

4. Datenverarbeitungsvorrichtung nach dem vorhergehenden Anspruch, wobei eine erste GPS-Antenne (7) mit einer zweiten GPS-Antenne (9) in einer Längsebene des Fahrzeugs fluchtend ausgerichtet ist, damit eine durch die erste GPS-Antenne (7) und die zweite GPS-Antenne (9) verlaufende Achse eine Längsrichtung (37) des Fahrzeugs definiert.

5. Datenverarbeitungsvorrichtung nach einem der Ansprüche 3 bis 4, wobei die erste GPS-Antenne (7) und die zweite GPS-Antenne (9) in gleicher Höhe auf dem Fahrzeug positioniert sind.

6. Datenverarbeitungsvorrichtung nach einem der Ansprüche 3 bis 5, wobei die erste GPS-Antenne (7) und die zweite GPS-Antenne (9) vorne bzw. hinten am Fahrzeug positioniert sind und der Abstand zwischen der ersten GPS-Antenne (7) und der zweiten GPS-Antenne (9) größer als ein oder gleich einem Meter ist.

7. Datenverarbeitungsvorrichtung nach einem der Ansprüche 3 bis 6, wobei die GPS-Antennen (7, 9) und die Einrichtungen zur Ermittlung von Koordinaten (11, 13) mit der RTK-Technologie kompatibel sind.

8. Datenverarbeitungsvorrichtung nach einem der Ansprüche 3 bis 7, wobei die GPS-Antennen (7, 9) ebenfalls Signale empfangen können, die von Satelliten kommen, welche zu einem Ortungssystem der Art GLONASS gehören, und die Einrichtungen zur Ermittlung von Koordinaten (11, 13) die Signale verarbeiten können.

9. Computerprogramm zur Datenverarbeitung für die Ermittlung von Driftwerten (δ,δ') mindestens eines Luftreifens (21, 22), wobei der Luftreifen zu einem Fahrzeug (1) gehört, das mindestens zwei Räder aufweist, wobei das Fahrzeug mindestens zwei GPS-Antennen (7, 9) und Einrichtungen (20) zur Ermittlung von Wankwerten (β) des Fahrzeugs enthält, **dadurch gekennzeichnet, dass** das Computerprogramm Anweisungen zur Durchführung folgender Schritte enthält:

   - für verschiedene Stellungen des Fahrzeugs auf der Fahrbahn:

      - Ermittlung von Koordinaten der GPS-Antennen (7, 9) ;
      - Ermittlung von Wankwerten (β);

   - Ermittlung verschiedener Kontaktpunkte (29, 31) zwischen dem Luftreifen (21, 22) und der Fahrbahn ausgehend von Koordinaten mindestens einer der GPS-Antennen (7, 9) und von verschiedenen Wankwerten (β), wobei die Kontaktpunkte eine Fahrspur (39, 41) des Luftreifens auf der Fahrbahn formen;
   - an mindestens einem Kontaktpunkt unter den Kontaktpunkten:

      - Ermittlung einer Tangente zur Fahrspur des Luftreifens im Bereich des Kontaktpunkts;

- Ermittlung, ausgehend von Koordinaten der GPS-Antennen, einer Ausrichtung einer dem Luftreifen zugeordneten Radebene;
- Ermittlung eines Driftwerts ausgehend von der Tangente und der Ausrichtung der Radebene.

**Claims**

1. Data processing method for determining drift values (δ,δ') of at least one tyre (21, 22), the said tyre belonging to a vehicle (1) comprising at least two wheels, the said vehicle comprising at least two GPS antennas (7, 9) and means (20) for determining values of roll (β) of the said vehicle, wherein the said method comprises the following steps:

- for various positions of the vehicle on a track:

  - determination (E1) of coordinates of the GPS antennas;
  - determination (E2) of values of roll (β) of the vehicle;

- determination (E3) of various points of contact (29, 31) between the tyre and the track on the basis of coordinates of at least one of the GPS antennas and of various roll values, the said contact points (29, 31) forming a trajectory (39, 41) of the tyre on the track;
- at at least one contact point (29, 31) from among the said contact points:

  - determination (E4) of a tangent (43, 45) to the trajectory of the tyre at the level of the said contact point;
  - determination (E5) of an orientation of a wheel plane (33, 35) associated with the tyre on the basis of coordinates of the GPS antennas (7, 9);
  - determination (E6) of a drift value (δ,δ') on the basis of the tangent (43, 45) and of the orientation of the wheel plane (33, 35).

2. Data processing method according to the preceding claim comprising, for various positions of the vehicle on the track, a step (E2') of determining values of steer (θ) of the front wheel of the vehicle, and an orientation of a wheel plane (33) associated with the front tyre (21) is determined as a function of one of the steer values and of a longitudinal direction (37) of the vehicle determined on the basis of coordinates of the GPS antennas (7, 9).

3. Data processing device for determining drift values (δ,δ') of at least one tyre (21, 22), the said tyre belonging to a vehicle (1) with at least two wheels, wherein the said data processing device comprises:

- at least two GPS antennas (7, 9);
- means (11, 13) for determining coordinates of the GPS antennas for various positions of the vehicle on a track;
- means (20) for determining roll values for the various positions of the vehicle on the track;
- means (55) for determining various points of contact between the tyre and the track on the basis of coordinates of at least one of the GPS antennas and of various roll values (β), the said contact points forming a trajectory of the tyre on the track;
- means (57) for determining a tangent to the trajectory of the tyre at the level of a contact point from among the said contact points;
- means (59) for determining, on the basis of coordinates of the GPS antennas, an orientation of a wheel plane associated with the tyre, at the said contact point;
- means (61) for determining a drift value (δ,δ') on the basis of the tangent and of the orientation of the wheel plane.

4. Data processing device according to the preceding claim in which a first GPS antenna (7) is aligned with a second GPS antenna (9) in a longitudinal plane of the vehicle so that an axis passing through the first GPS antenna (7) and the second GPS antenna (9) defines a longitudinal direction (37) of the vehicle.

5. Data processing device according to one of Claims 3 to 4, in which the first GPS antenna (7) and the second GPS antenna (9) are positioned at one and the same height on the vehicle.

6. Data processing device according to any one of Claims 3 to 5, in which the first GPS antenna (7) and the second GPS antenna (9) are positioned respectively at the front and at the rear of the vehicle and the distance between the first GPS antenna (7) and the second GPS antenna (9) is greater than or equal to a metre.

7. Data processing device according to one of Claims 3 to 6, in which the GPS antennas (7, 9) and the means for determining coordinates (11, 13) are compatible with RTK technology.

8. Data processing device according to one of Claims 3 to 7, in which the GPS antennas (7, 9) are also able to receive signals originating from satellites belonging to a locating system of GLONASS type and the means for determining coordinates (11, 13) are able to process the said signals.

9. Computer program for processing data for determining drift values ($\delta$,$\delta$') of at least one tyre (21, 22), the said tyre belonging to a vehicle (1) comprising at least two wheels, the said vehicle comprising at least two GPS antennas (7, 9) and means (20) for determining values of roll ($\beta$) of the said vehicle, wherein the said computer program comprises instructions for the implementation of the steps of:

- for various positions of the vehicle on the track:

- determining coordinates of the GPS antennas (7, 9);
- determining roll values ($\beta$);

- determining various points of contact (29, 31) between the tyre (21, 22) and the track on the basis of coordinates of at least one of the GPS antennas (7, 9) and of various roll values ($\beta$), the said contact points:
- at at least one contact point from among the said contact points:

- determining a tangent to the trajectory of the tyre at the level of the said contact point;
- determining, on the basis of coordinates of the GPS antennas, an orientation of a wheel plane associated with the tyre;
- determining a drift value on the basis of the tangent and of the orientation of the wheel plane.

**Fig. 1**

**Fig. 2**

**Fig. 3**

Figure 4

**Fig. 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030059744 A